(19) Europäisches Patentamt
European Patent Office
Office européen des brevets

(11) **EP 3 137 872 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(51) Int Cl.:
***G01M 17/10*** *(2006.01)*

(21) Anmeldenummer: **15719206.3**

(22) Anmeldetag: **27.04.2015**

(86) Internationale Anmeldenummer:
**PCT/EP2015/059021**

(87) Internationale Veröffentlichungsnummer:
**WO 2015/165839 (05.11.2015 Gazette 2015/44)**

(54) **ROLLENPRÜFSTAND UND BETRIEBSVERFAHREN FÜR EINEN ROLLENPRÜFSTAND**

ROLLER DYNAMOMETER AND OPERATING PROCEDURE FOR A ROLLER DYNAMOMETER

BANC D'ESSAI À ROULEAUX ET PROCÉDÉ D'EXPLOITATION POUR UN BANC D'ESSAI À ROULEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2014 DE 102014106086**

(43) Veröffentlichungstag der Anmeldung:
**08.03.2017 Patentblatt 2017/10**

(73) Patentinhaber: **KNORR-BREMSE Systeme für Schienenfahrzeuge GmbH 80809 München (DE)**

(72) Erfinder:
• **FISCHER, Marcus**
**80469 München (DE)**
• **KOCH, Jörg**
**80999 München (DE)**
• **ULLRICH, Detlev**
**12621 Berlin (DE)**
• **FESTEL, Andreas**
**95234 Sparneck (DE)**

(56) Entgegenhaltungen:
**DE-A1-102010 060 501       DE-A1-102012 013 525
DE-B3-102012 108 706**

**Beschreibung**

Die vorliegende Erfindung betrifft einen Rollenprüfstand für einen Radsatz für ein Schienenfahrzeug, insbesondere zur Simulierung eines Sinuslaufs, und ein Betriebsverfahren für einen derartigen Rollenprüfstand. Der Rollenprüfstand weist zwei parallel angeordnete insbesondere drehbare Schienenrollen auf, insbesondere mit schienentypischem bzw. eisenbahnschienentypischem Profil, die insbesondere starr oder mittels Getriebe bei definierter Relativgeschwindigkeit miteinander verbunden sind. Ferner weist der Rollenprüfstand einen ersten Längsaktuator und einen zweiten Längsaktuator auf. Der bei dem Betriebsverfahren eingesetzte Radsatz weist zwei insbesondere starr mit einer Radachse verbundene Räder auf, insbesondere mit schienenfahrzeugtypischem bzw. eisenbahnschienenfahrzeugtypischem Radprofil. Die Radachse ist mit ihren Enden in einem ersten und einem zweiten Achslager drehbar gelagert, wobei die Räder in einer jeweiligen Grundposition der Achslager jeweils in einem vorbestimmten Punkt der Schienenrollen, insbesondere dem oberen Scheitelpunkt, mit den Schienenrollen in Kontakt stehen. Der erste und der zweite Längsaktuator wirken jeweils in einer quer zur Radachse und insbesondere zumindest im Wesentlichen horizontal verlaufenden Längsrichtung auf das erste bzw. zweite Achslager ein.

Die Fahreigenschaften von Schienenfahrzeugen, insbesondere mögliche Beschleunigungen und Verzögerungen, werden maßgeblich von dem Kontakt zwischen Rad und Schiene beeinflusst. Dieser wird hauptsächlich durch die Reibeigenschaften von Rad und Schiene sowie eventuell vorhandener Zwischenschichten und dem Schlupf zwischen den Rädern und der Schiene beeinflusst. Eine möglichst genaue Kenntnis des Kontaktes zwischen Rad und Schiene ermöglicht eine Optimierung der Fahr- und Bremseigenschaften und eine optimale Auslegung von Fahrgestellen, Antriebsaggregaten und/oder Bremssystemen.

Neben realen Fahrversuchen auf der Schiene und Simulationen mit unterschiedlichen mathematischen Modellen bieten Rollenprüfstände die Möglichkeit, fahrdynamische Untersuchungen bzw. Belastungsuntersuchungen zuverlässig mit reproduzierbaren Ergebnissen durchführen zu können. Insbesondere lassen sich extreme Fahrzustände darstellen, die im normalen Betrieb auf der Schiene zu gefährlich oder aus anderen Gründen unzulässig sind.

Die Ergebnisse von Untersuchungen auf Rollenprüfständen sind umso ergiebiger und wertvoller, je realitätsgetreuer die Bewegungsabläufe zwischen dem Radsatz und der Schiene nachgebildet werden können. Bei einem eisenbahntypischen Radprofil weisen die Laufräder üblicherweise ein sich nach außen hin verjüngendes Profil auf. Am inneren Radrand ist zusätzlich ein Spurkranz vorgesehen. Das Profil bedingt, dass ein in Achsrichtung nach außen versetztes Rad mit einem größeren Umfang auf der Schiene abrollt als ein nach innen zur Gleismitte hin versetztes Rad. Da die beiden Räder insbesondere starr mit ihrer Achse verbunden sind, bleibt bei einer Auslenkung des Radsatzes aus der Gleismitte das nach innen versetzte Rad gegenüber dem nach außen versetzten zurück, so dass die Radachse sich gegenüber der Fahrtrichtung um eine zumindest im Wesentlichen durch ihren Mittelpunkt vertikal nach oben verlaufende Drehachse gleiseinwärts dreht. Durch diese Drehung der Radachse läuft dann das zunächst nach innen versetzte Rad nach außen und entsprechend das zunächst nach außen versetzten Rad nach innen, so dass der Radsatz über die Gleismitte hinaus eine entgegengesetzte Auslenkung erfährt, bei der sich der vorstehend beschriebene Vorgang mit umgekehrtem Vorzeichen wiederholt.

Diese Fahrdynamik resultiert in einer seitlichen Pendelbewegung der gesamten Radachse. Diese Pendelbewegung wird als Sinuslauf bezeichnet, da sie in erster Näherung einer Sinuskurve folgt. Mit Bezug auf die periodisch pendelnde Drehbewegung der Radachse um die vertikale Drehachse wird diese Fahrdynamik auch Taumelbewegung genannt. Es versteht sich, dass beide Phänomene, die periodische seitliche Auslenkung des Radsatzes ebenso wie die periodische Drehung der Radachse, unterschiedliche Aspekte des gleichen Vorgangs sind. In diesem Sinne wird nachfolgend zur Vereinfachung durchgängig nur eine Bezeichnung, nämlich Sinuslauf, für diesen Vorgang verwendet, wobei beide Phänomene eingeschlossen sind.

Es ist für Rollenprüfstände der eingangs genannten Art bekannt, einen auf Simulationsberechnungen beruhenden Sinuslauf durch eine entsprechende Wegsteuerung eines Queraktuators und/oder der beiden Längsaktuatoren forciert aufzuprägen. Die natürliche Bewegung des Radsatzes auf den Schienenrollen wird dabei jedoch unterdrückt bzw. durch die aufgeprägte Bewegung überlagert. Insbesondere stellen die sich im Rad-/Schienesystem einstellenden Kräfte, insbesondere im Kontaktpunkt zwischen Rad und Schiene, lediglich eine Überlagerung der natürlichen mit den durch die aufgeprägte sinusförmige Bewegung auftretenden Kräften dar.

DE 12 2012 108 706 B3 offenbart ein Betriebsverfahren für einen Rollenprüfstand gemäß dem Oberbegriff von Anspruch 1.

Es ist daher eine Aufgabe der vorliegenden Erfindung, ein Betriebsverfahren für einen Rollenprüfstand zu schaffen, bei dem Untersuchungen möglichst realitätsnah bzw. -getreu, insbesondere unter Verwendung einer möglichst natürlichen Sinusbewegung, durchgeführt werden können. Es ist eine weitere Aufgabe, einen Rollenprüfstand anzugeben, der zur Durchführung des Verfahrens geeignet ist.

Diese Aufgabe wird durch ein Betriebsverfahren für einen Rollenprüfstand bzw. durch einen Rollenprüfstand mit den Merkmalen der unabhängigen Ansprüche 1 und 13 gelöst. Vorteilhafte Ausgestaltungen und Weiterbildungen der Erfindung sind in den abhängigen Ansprüchen angegeben.

Ein erfindungsgemäßes Betriebsverfahren der eingangs genannten Art zeichnet sich dadurch aus, dass der auf das erste Achslager einwirkende erste Längsaktuator in Kraftregelung betrieben wird und eine Auslenkung des ersten Achslagers gegenüber seiner Grundposition in Längsrichtung bestimmt wird. Der auf das zweite Achslager einwirkende zweite Längsaktuator wird in Wegregelung betrieben, derart, dass eine Auslenkung des zweiten Achslagers gegenüber seiner Grundposition eingestellt wird, die im Betrag der Auslenkung des ersten Achslagers entspricht und der Auslenkung des ersten Achslagers in Längsrichtung entgegengesetzt ist.

Auf diese Weise wird erreicht, dass der Radsatz sich um eine vertikale Drehachse drehen kann, ohne dass sich der Mittelpunkt des Radsatzes, d.h. die Mitte zwischen den beiden Rädern bzw. Achslagern, in Längsrichtung aus seiner Grundposition, insbesondere genau oberhalb der Schienenrollenachse, wegbewegt. Die Abweichung der beiden Räder von den vorgegebenen Punkten, insbesondere von den oberen Scheitelpunkten der Schienenrollen, ist im Mittel immer Null. Gleichwohl ist es dabei möglich, dass der erste Längsaktuator frei wählbar auf einen Kraftsollwert oder einen Kraftsollwertverlauf geregelt wird. Im Gegensatz zu dem aus dem Stand der Technik bekannten Verfahren werden die beiden Längsaktuatoren also nicht wegegesteuert, sondern der eine der beiden Längsaktuatoren wird kraftgeregelt und der andere der beiden Längsaktuatoren wird wegegeregelt. Im Gegensatz zu dem aus dem Stand der Technik bekannten Verfahren wird ein sinusförmiger Verlauf nicht durch eine entsprechende Wegsteuerung der beiden Längsaktuatoren aufgeprägt, sondern es stellt sich ein zumindest annähernd natürlicher Sinuslauf des Radsatzes vielmehr von selbst ein.

In einer vorteilhaften Ausgestaltung des Betriebsverfahrens erfolgt in einer Betriebsart die Kraftregelung des ersten Längsaktuators auf eine vorgegebene konstante Kraft. Mit einer konstanten Kraft gleich Null kann ein unbedämpfter Sinuslauf bei Geradeausfahrt simuliert werden, mit einer konstanten Kraft ungleich Null kann ein unbedämpfter Sinuslauf bei Bogenfahrt simuliert werden.

Eine weitere vorteilhafte Ausgestaltung des Betriebsverfahren kann eingesetzt werden, wenn der Rollenprüfstand zusätzlich einen Queraktuator aufweist, der in einer entlang der Radachse und insbesondere zumindest im Wesentlichen horizontal verlaufenden Querrichtung auf das erste oder zweite Achslager einwirkt. Bevorzugt wird der auf das jeweilige Achslager einwirkende Queraktuator - ebenso wie der erste Längsaktuator - in Kraftregelung betrieben. Insbesondere in einer Betriebsart zur Simulierung eines unbedämpften Sinuslaufs bei Geradeaus- bzw. Bogenfahrt ist es bevorzugt, wenn die Kraftregelung des Queraktuators auf eine vorgegebene konstante Querkraft erfolgt, die insbesondere gleich oder ungleich Null ist.

In einer weiteren vorteilhaften Ausgestaltung des Betriebsverfahrens erfolgt in einer weiteren Betriebsart die Kraftregelung des ersten Längsaktuators und/oder des Queraktuators auf eine vorgegebene zeitlich veränderliche, von dem ersten Längsaktuator ausgeübte Kraft und/oder Querkraft, die eine Dämpfungskomponente aufweist, die abhängig von einer zeitlichen Änderung der Auslenkung des ersten Achslagers in Längsrichtung bzw. einer in Querrichtung gegenüber einer Mittenposition des Radsatzes erfolgenden Auslenkung des Achslagers, auf das der Queraktuator wirkt, ist. Hierdurch kann ein bedämpfter Sinuslauf bei Geradeaus- oder Bogenfahrt simuliert werden.

Alternativ oder zusätzlich kann die Kraftregelung des ersten Längsaktuators und/oder des Queraktuators auf eine vorgegebene, von dem ersten Längsaktuator ausgeübte Kraft und/oder Querkraft erfolgen, die eine Komponente aufweist, die abhängig von einer Auslenkung des ersten Achslagers in Längsrichtung bzw. einer in Querrichtung gegenüber einer Mittenposition des Radsatzes erfolgenden Auslenkung des Achslagers, auf das der Queraktuator wirkt, ist. Dadurch können beispielsweise Totwege nachgeahmt werden, die charakteristisch für mechanische Feder-Dämpfer-Systeme sind.

Gemäß einer Ausgestaltung der Erfindung wirkt insbesondere zu Beginn des Betriebsverfahrens, insbesondere zur Anregung des Sinuslaufs, zumindest einer der Längsaktuatoren und/oder der Queraktuator mit einem Impulsstoß bzw. einem Anregungsimpuls auf das jeweilige Achslager ein. Ein derartiger Impulsstoß kann dazu genutzt werden, den Radsatz zumindest geringfügig aus seiner Grundposition auszulenken und damit den Sinuslauf zu initiieren. Der Radsatz kann auch ursprünglich bereits außerhalb der Grundposition, insbesondere außermittig, auf die Schienenrollen aufgesetzt werden.

In weiteren vorteilhaften Ausgestaltungen des Betriebsverfahrens wird zumindest für einen der Aktuatoren eine auf das jeweilige Achslager einwirkende Kraft und/oder Beschleunigung überwacht, wobei ein Fehlersignal ausgegeben wird, wenn der Absolutwert der jeweiligen Kraft und/oder Beschleunigung einen jeweiligen vorgegebenen Grenzwert überschreitet. Bevorzugt wird beim Vorliegen des Fehlersignals der Rollenprüfstand und/oder das Betriebsverfahren, zumindest teilweise, abgeschaltet. Insbesondere können die rotierenden Schienenrollen und die Räder in einen sicheren Zustand gebracht und insbesondere abgebremst werden. Es werden so Sicherungsmaßnahmen ergriffen, um eine unkontrollierte Bewegung des Radsatzes zu verhindern.

Ein erfindungsgemäßer Rollenprüfstand der eingangs genannten Art weist eine mit dem ersten und dem zweiten Längsaktuator und ggf. einem Queraktuator verbundene Regeleinrichtung auf, die das zuvor genannte Verfahren durchführt. Es ergeben sich die im Zusammenhang mit den Verfahren genannten Vorteile. Die Erfindung wird nachfolgend anhand von Ausführungsbeispielen mithilfe von zwei Figuren näher dargestellt. Es zeigen:

Fig. 1     einen Rollenprüfstand in einer schematischen perspektivischen Darstellung, und
Fig. 2     ein Flussdiagramm eines Verfahrens zum Betreiben eines Rollenprüfstands.

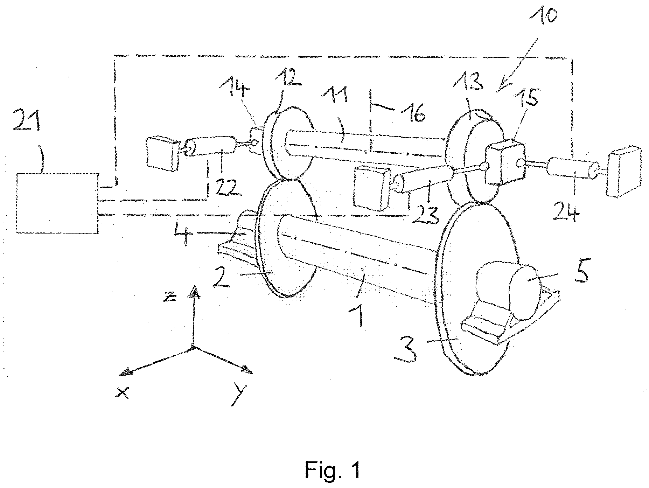

In Fig. 1 ist ein Ausführungsbeispiel eines Rollenprüfstandes in einer schematischen perspektivischen Darstellung gezeigt. Der Rollenprüfstand ist auf seine wesentlichen, im Rahmen der Erfindung relevanten Elemente reduziert. Der Rollenprüfstand umfasst eine Schienenrollenachse 1 mit zwei starr damit verbundenen Schienenrollen 2, 3. Die Schienenrollenachse 1 ist durch Lagerungen 4, 5 drehbar gelagert. Die Schienenrollenachse 1 ist mit einer hier nicht dargestellten Antriebseinrichtung gekoppelt, durch die die Schienenrollen 2, 3 in eine Drehbewegung versetzt werden können. Die Schienenrollen 2, 3 weisen an ihrem Umfang ein Profil auf, das dem eines betrachteten Schienensystems nachgebildet ist. Der Abstand der Schienenrollen 2, 3 entspricht der Spurweite des Schienensystems. Denkbar ist auch eine Ausführung des Rollenprüfstands mit einer Schienenrollenachse 1, die mittels wenigstens einem insbesondere schaltbarem Getriebe bei definierter Relativgeschwindigkeit mit den Schienenrollen 2, 3 verbunden ist. Die beiden Schienenrollen können aber durch zwei voneinander separate Antriebe angetrieben werden, wobei ein Drehzahlverhältnis der beiden Schienenrollen zueinander, gleich oder ungleich 1, durch eine entsprechende Ansteuerung eingestellt werden kann.

Im Betrieb des Rollenprüfstands repräsentieren die drehbaren Schienenrollen 2, 3 die sich relativ zum Prüfling, dem Radsatz, insbesondere Testradsatz, bewegende Schiene. Ein derartiger Radsatz ist gekennzeichnet mit dem Bezugszeichen 10 in der Fig. 1 dargestellt.

Der Radsatz 10 umfasst eine Radachse 11, insbesondere Testradachse, mit der im äußeren Bereich an einer Seite ein erstes Rad 12, insbesondere Testrad, und an der entgegengesetzten Seite ein zweites Rad 13, insbesondere Testrad, starr verbunden ist. Die Radachse 11 ist mit ihren Enden an der Seite des ersten Rads 12 in einem ersten Achslager 14 und an der Seite des zweiten Rads 13 in einem zweiten Achslager 15 jeweils drehbar gelagert.

Der Radsatz 10 kann ein zu testender Laufradsatz sein. In diesem Fall wird eine Bewegung zwischen dem Laufradsatz und der Schiene durch einen Antrieb der Schienenrollenachse 1 und somit der Schienenrollen 2, 3 simuliert. Der Radsatz 10 kann ebenso ein Treibradsatz sein, der über eine geeignete (hier nicht dargestellte) eigene Antriebsvorrichtung antreibbar ist. In diesem Fall kann eine Bewegung des Treibradsatzes gegenüber der Schiene durch Antrieb der Räder 12, 13 und/oder durch Antrieb der Schienenrollen 2, 3 nachgebildet werden. Werden die Räder 12, 13 und die Schienenrollen 2, 3 angetrieben, können beispielsweise Fahrsituationen nachgestellt werden, in denen ein Schlupf zwischen Rad und Schiene vorliegt. In allen genannten Fällen kann zusätzlich eine Bremsvorrichtung an dem Radsatz 10 angeordnet sein, um die Fahrdynamik bei Bremsvorgängen zu untersuchen.

Der Rollenprüfstand umfasst weiter eine Regeleinrichtung 21, die mit einem ersten Längsaktuator 22, einem zweiten Längsaktuator 23 und einem Queraktuator 24 gekoppelt ist und diese regelnd betreiben kann.

Der erste Längsaktuator 22 ist mechanisch direkt oder indirekt mit dem ersten Achslager 14 verbunden und dazu eingerichtet, eine Kraft $Fx1$ in Längsrichtung ($Fx1>0$) bzw. entgegen der Längsrichtung ($Fx1<0$) auf das erste Achslager 14 auszuüben. Die Längsrichtung ist in Fig. 1 im Koordinatensystem als x-Richtung eingezeichnet. Sie verläuft horizontal und quer, insbesondere senkrecht, zur Ausrichtung der Schienenrollenachse 1 bzw. der Radachse 11.

Analog dazu ist der zweite Längsaktuator 23 direkt oder indirekt mit dem zweiten Achslager 15 mechanisch gekoppelt. Eine indirekte Ankopplung der Längsaktuatoren 22, 23 ist beispielsweise gegeben, wenn die Längsaktuatoren 22, 23 an einer mit den Achslagern 14, 15 verbundenen Traverse angreifen. Zwischen den Achslagern 14, 15 und der Traverse können Feder- und/oder Dämpfersysteme angeordnet sein.

Darüber hinaus ist ein Queraktuator 24 vorgesehen, der an einem der beiden Achslager, hier beispielhaft dem zweiten Achslager 15 angreift und der dazu eingerichtet ist, eine Querkraft $Fy$ in einer Querrichtung entlang der Radachse 11 auf den Radsatz 10 auszuüben. Die Querrichtung, in die der Queraktuator 24 wirkt, ist in dem Koordinatensystem der Fig. 1 als y-Richtung eingetragen. Alternativ kann der Queraktuator auch an einer Traverse angreifen.

Die genannten Aktuatoren sind bevorzugt Hydraulikaktuatoren, insbesondere Hydraulikzylinder, es ist jedoch auch die Verwendung von elektromechanisch arbeitenden Aktuatoren möglich. In der Fig. 1 nicht gesondert dargestellt sind in dem ersten und dem zweiten Längsaktuator 22, 23 und dem Queraktuator 24 integrierte oder mit diesen zusammenwirkende Kraft- und Wegsensoren. Von dem jeweiligen Kraftsensor wird insbesondere die von dem Längsaktuator 22 und von dem Queraktuator 24 auf das Achslager 14 bzw. 15 ausgeübte Kraft $Fx1$ bzw. $Fy$ erfasst und an die Regeleinrichtung 21 übermittelt. Als Kraftsensoren können beispielsweise Dehnungs- oder Piezosensoren eingesetzt werden.

Von den Wegsensoren wird entsprechend eine Bewegung des ersten Achslagers 14 bzw. des zweiten Achslagers 15 erfasst und ebenfalls an die Regeleinrichtung 21 übermittelt. Die Bewegungen des ersten Achslagers 14 bzw. des zweiten Achslagers 15 in Längsrichtung werden im Folgenden als Auslenkungen $Sx1$ bzw. $Sx2$ bezeichnet, wobei die Auslenkungen relativ zu einer Mittel- oder Grundposition gemessen werden, bei der die Räder 12, 13 die Schienenrollen 2, 3 in ihrem oberen Scheitelpunkt berühren. Die Bewegung des Radsatzes 10 in der Querrichtung wird im Folgenden als Auslenkung $Sy$ bezeichnet. Die Wegsensoren können beispielsweise optische oder über Widerstandsänderung arbeitende Sensoren sein. Es können auch bilderfassende Systeme, insbesondere Kameras, eingesetzt werden. Im Zusammenhang mit hydraulisch arbeitenden Aktuatoren ist eine Wegbestimmung auch über eine Erfassung der in den Aktuator hinein oder aus ihm heraus fließenden Menge an Hydraulikflüssigkeit möglich.

In der Figur nicht dargestellt sind optionale weitere Aktuatoren, die in vertikaler Richtung nach unten, in der Figur entgegen der z-Richtung, auf das erste und zweite Achslager 14, 15 einwirken. Über diese Aktuatoren kann eine statische und/oder dynamische Belastung des Radsatzes 10 während des Testlaufes nachempfunden werden.

Erfindungsgemäß ist die Regeleinrichtung 21 dazu ausgebildet, den ersten Längsaktuator 22 kraftgeregelt zu betreiben. Darüber hinaus ist die Regeleinrichtung 21 dazu ausgebildet, die Auslenkung Sx1 des ersten Achslagers 14 zu erfassen und den auf das zweite Achslager 15 wirkenden Längsaktuator 22 so zu regeln, dass die Auslenkung Sx2 des zweiten Achslagers 15 betragsmäßig ebenso groß ist wie die Auslenkung Sx1 des ersten Achslagers 14, jedoch in die entgegengesetzte Richtung weist, dass also gilt: Sx2 = -Sx1. Auf diese Weise wird ermöglicht, dass der Radsatz 10 sich um eine vertikale Drehachse 16 drehen kann, ohne dass sich der Mittelpunkt der Radachse 11 in Längsrichtung aus seiner Position genau oberhalb der Schienenrollenachse 1 wegbewegt. Es kann sich ein natürlicher Sinuslauf des Radsatzes 10 einstellen, bei dem die zeitlich gemittelte Abweichung der Räder 12, 13 von den Scheitelpunkten der Schienenrollen 2, 3 gegen Null geht oder gleich Null ist.

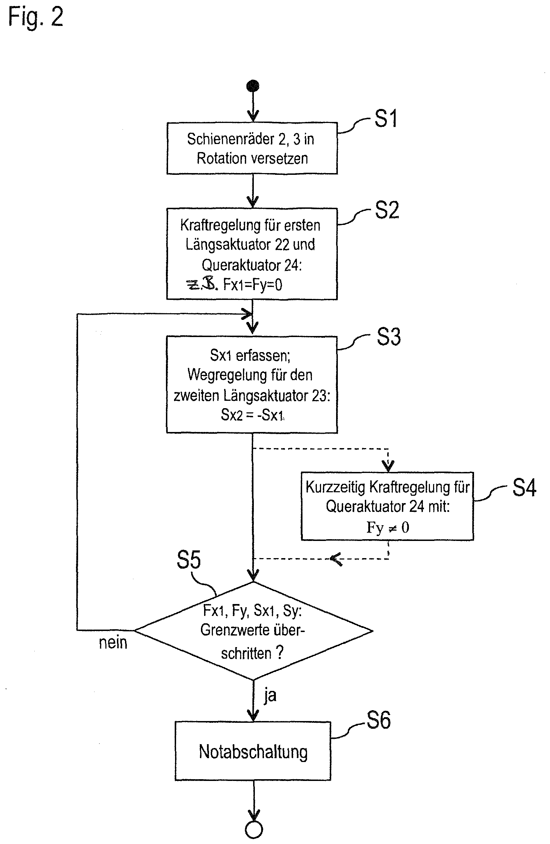

Nachfolgend wird anhand eines Flussdiagramms in Fig. 2 ein Betriebsverfahren für einen Rollenprüfstand gemäß verschiedener Betriebsarten dargestellt, wie es beispielsweise von dem Rollenprüfstand der Fig. 1 ausgeführt wird, um verschiedene Fahrsituationen nachzubilden. Das Betriebsverfahren wird mit Bezug zu Fig. 1 und unter Verwendung der Bezugszeichen der Fig. 1 beschrieben.

In einem ersten Schritt S1 wird ein Testlauf für ein Laufradsatz als Radsatz 10 gestartet, indem zunächst die Längsaktuatoren 22, 23 und der Queraktuator 24 bzw. die Achslager 14, 15 in der Grundposition fixiert und die Schienenräder 2, 3 durch ihren Antrieb in Rotation versetzt werden. Nachdem eine vorgesehene Drehfrequenz erreicht ist, wird das Verfahren mit einem Schritt S2 fortgesetzt.

In dem Schritt S2 wird von der Regeleinrichtung 21 auf einen Kraftregelungs-Modus für den ersten Längsaktuator 22 und den Queraktuator 24 umgeschaltet. Bei der Kraftregelung werden die entsprechenden Kräfte Fx1 und Fy erfasst und der erste Längsaktuator 22 und der Queraktuator 24 so geregelt, dass die vorgegebenen Sollwerte F0x1, F0y der Kraft eingehalten werden. Um beispielsweise eine Fahrsituation im geraden Gleis nachzubilden, werden die beiden Sollwerte der Kräfte auf F0x1=F0y=0 gesetzt.

In einem nächsten Schritt S3 wird die Auslenkung Sx1 des ersten Achslagers 14 erfasst und der zweite Längsaktuator 23 so geregelt, dass für die Auslenkung Sx2 des zweiten Achslagers 15 gilt: Sx2= - Sx1. Der zweite Längsaktuator 23 wird also in einem Wegregelungs-Modus angesteuert. Der erste Längsaktuator 22 und der Queraktuator 24 verbleiben in dem zuvor eingestellten Kraftregelungs-Modus.

Ein Sinuslauf stellt sich nun ein, sobald der Radsatz 10 geringfügig aus seiner Grundposition ausgelenkt wird. Dies erfolgt insbesondere einmalig in einem nächsten Schritt S4 vorzugsweise durch einen kurzen Auslenkungsimpuls durch den Queraktuator 24, indem kurzzeitig im Kraftregelungs-Modus ein Sollwert für die Kraft F0y≠0 vorgegeben wird oder indem der Queraktuator 24 kurzzeitig aus dem Kraftregelungs-Modus genommen wird.

In einem nächsten Schritt S5 werden die aktuellen Werte für die Kräfte Fx1, Fx2 und Fy sowie die Auslenkungen Sx1, Sx2 und Sy mit vorgegebenen Grenzwerten verglichen. Liegen die Werte unterhalb der Grenzwerte, verzweigt das Verfahren zurück zu dem Schritt S3, der dann abwechselnd mit dem Schritt S5 oder parallel zu diesem ausgeführt wird. Liegt einer der Werte oberhalb des entsprechenden Grenzwertes, wird das Verfahren in einem Schritt S6 fortgesetzt.

In dem Schritt S6 erfolgt eine Notabschaltung des Rollenprüfstands. Es werden Sicherungsmaßnahmen ergriffen, um eine unkontrollierte Bewegung des Radsatzes 10 zu verhindern. Beispielsweise können alle Aktuatoren 22, 23, 24 in einen Wegregelungs-Modus geschaltet werden, um den Radsatz 10 wieder in seine Grundposition zu bringen. Zudem wird die Drehzahl des Antriebs der Schienenräder 2, 3 verringert bzw. der Antrieb gestoppt. Auch kann ein sicherer Zustand erreicht werden, indem der Radsatz 10 angehoben wird.

In einer alternativen Betriebsart wird in Schritt S2 der Queraktuator 24 mit einem konstanten Wert Fy ≠ 0 beaufschlagt. Diese in bzw. entgegen der Querrichtung wirkende Kraft simuliert die durch eine Bogenfahrt auftretende Querbeschleunigung des Schienenfahrzeugs bzw. die Spurführungskraft bei einer Kurvenfahrt. Zusätzlich oder alternativ hierzu kann vorgesehen sein, für den ersten Längsaktuator 22 einen konstanten Sollwert F0x1 für die Kraft Fx1 ungleich Null vorzugeben. Eine Kraft Fx1 ≠ 0 entspricht dem Giermoment eines beispielsweise zweiachsigen Drehgestells. Auf diese Weise bildet sich ein Sinuslauf für einen Radsatz aus, der unter Krafteinflüssen steht, wie sie für Bogenfahrten typisch sind. Der Radsatz 10 wird möglicherweise seitlich anlaufen und unter einem bestimmten Anlaufwinkel stehen, gleichwohl aber die für die vorgegebenen Zwangskräfte typische Fahrdynamik zeigen.

In einer weiteren Betriebsart des Verfahrens ist vorgesehen, die von dem ersten Längsaktuator 22 und/oder dem Queraktuator 24 auf den Radsatz 10 wirkenden Kräfte Fx1 bzw. Fy nicht konstant zu halten, sondern mit einer Komponente zu versehen, die abhängig von einer zeitlichen Änderung der Auslenkung Sx1 des ersten Achslagers 14 bzw. der Auslenkung Sy des zweiten Achslagers 15 ist. Die Kraft Fx1 kann dabei vorzugsweise gemäß der folgenden Formel geregelt werden:

$$Fx1(t)=F0x1 - q \; d(Sx1(t))/dt \; .$$

Es stellt sich eine von der Zeit t abhängige Kraft Fx1(t) ein, die sich aus dem vorgegeben konstanten Sollwert F0x1 und einem Term ergibt, der abhängig von der zeitlichen Änderung der Auslenkung Sx1, also der Geschwindigkeit des Achslagers 14 ist. Es wird so eine Dämpfung eingeführt, deren Größe durch eine Dämpfungskonstante q eingestellt werden kann.

Analog kann die Kraft Fy vorzugsweise gemäß der folgenden Formel geregelt werden:

$$Fy(t)=F0y - p \; d(Sy(t))/dt \; ,$$

wobei wiederum die Größe der Dämpfung durch eine Dämpfungskonstante p eingestellt werden kann. Die Dämpfungen können beispielsweise mittels eines vorzugsweise elektronisch einstellbaren Reglers eingestellt werden.

Weiter ist es möglich, die Kräfte Fx1 und Fy unmittelbar abhängig von der Größe der jeweiligen Auslenkung Sx1 bzw. Sy vorzugeben, beispielsweise indem die Kräfte erst bei Überschreiten einer bestimmten, vorgegebenen Auslenkung den konstanten (oder gedämpften) Sollwert F0x1 bzw. F0y einnehmen und unterhalb des Grenzwertes Null sind. Es werden so Totwege eingeführt, die charakteristisch für mechanische Feder-Dämpfersysteme sind.

Auf diese Weise kann das Bewegungs- und Dämpfungsverhalten eines einzelnen Radsatzes im Prüfstand simuliert werden, ohne dafür ein Drehgestell oder ein komplettes Schienenfahrzeug verwenden zu müssen. Die Dämpfungskonstanten p und q und eventuelle Totwege sind die Kennwerte der Schlingerdämpfer, durch die im Fahrzeug die lateralen und transversalen Bewegungen des Radsatzes bedämpft werden. Der Vorteil einer solchen Prüfanordnung ist, dass man damit rein elektronisch wesentliche Bewegungscharakteristiken am Rollenprüfstand abbilden und auf diese Weise auch die Reaktion des Radsatzes etwa auf Brems- und Antriebsvorgänge, unterschiedliche Kontaktbedingungen und sich verändernde Profilpaarungen der Profile von Schiene und Rad am Rollenprüfstand darstellen kann. Hierfür sind keine mechanischen An- oder Umbauten erforderlich.

Bezugszeichenliste

    1 Schienenrollenachse
    2, 3 Schienenrolle
    4, 5 Lagerung
    10 Radsatz
    11 Radachse
    12 erstes Rad
    13 zweites Rad
    14 erstes Achslager
    15 zweites Achslager
    16 vertikale Drehachse
    21 Regeleinrichtung
    22 erster Längsaktuator
    23 zweiter Längsaktuator
    24 Queraktuator

**Patentansprüche**

1. Betriebsverfahren für einen Rollenprüfstand für einen Radsatz (10) für ein Schienenfahrzeug zur Simulierung eines Sinuslaufs, wobei

    - der Rollenprüfstand zwei parallel angeordnete Schienenrollen (2, 3) aufweist,
    - der Radsatz (10) zwei mit einer Radachse (11) verbundene Räder (12, 13) aufweist, wobei die Radachse (11) mit ihren Enden in einem ersten Achslager (14) und einem zweiten Achslager (15) drehbar gelagert ist,
    - die Räder (12, 13) in einer jeweiligen Grundposition der Achslager (14, 15) jeweils in einem vorgegebenen Punkt der Schienenrollen (2, 3) mit diesen in Kontakt stehen,
    - ein erster Längsaktuator (22) und ein zweiter Längsaktuator (23) jeweils in einer quer zur Radachse (11) verlaufenden Längsrichtung (x) auf das erste Achslager (14) bzw. das zweite Achslager (15) einwirken, und
- der auf das erste Achslager (14) einwirkende erste Längsaktuator (22) in Kraftregelung betrieben wird,

**dadurch gekennzeichnet, dass**

- eine Auslenkung (Sx1) des ersten Achslagers (14) gegenüber seiner Grundposition in Längsrichtung (x) bestimmt wird, und
- der auf das zweite Achslager (15) einwirkende zweite Längsaktuator (23) in Wegregelung betrieben wird, derart, dass eine Auslenkung (Sx2) des zweiten Achslagers (15) gegenüber seiner Grundposition eingestellt wird, die im Betrag der Auslenkung (Sx1) des ersten Achslagers (14) entspricht und der Auslenkung (Sx1) des ersten Achslagers (14) in Längsrichtung (x) entgegengesetzt ist.

2. Betriebsverfahren nach Anspruch 1, **dadurch gekennzeichnet, dass** die vorgegebenen Punkte obere Scheitelpunkte der Schienenrollen (2, 3) sind.

3. Betriebsverfahren nach Anspruch 1 oder 2, **dadurch gekennzeichnet, dass** in einer Betriebsart, insbesondere zur Simulierung eines unbedämpften Sinuslaufs bei Geradeaus- oder Bogenfahrt, die Kraftregelung des ersten Längsaktuators (22) auf eine vorgegebene konstante Kraft (Fx1) erfolgt, die insbesondere gleich oder ungleich Null ist.

4. Betriebsverfahren nach einem der Ansprüche 1 bis 3, **dadurch gekennzeichnet, dass** in einer Betriebsart, insbesondere zur Simulierung eines bedämpften Sinuslaufs bei Geradeaus- oder Bogenfahrt, die Kraftregelung des ersten Längsaktuators (22) auf eine vorgegebene zeitlich veränderliche Kraft (Fx1) erfolgt, die eine Dämpfungskomponente aufweist, die abhängig von einer zeitlichen Änderung der Auslenkung (Sx1) des ersten Achslagers (14) in Längsrichtung (x) ist.

5. Betriebsverfahren nach Anspruch 4, **dadurch gekennzeichnet, dass** die zeitlich veränderliche Kraft (Fx1) durch die Formel

$$Fx1(t)=F0x1 - q\ d(Sx1(t))/dt \ .$$

gegeben ist, wobei Fx1(t) der zeitlich veränderlichen Kraft, F0x1 einer Konstanten, $d(Sx1(t))/dt$ der zeitlichen Änderung der Auslenkung (Sx1) des ersten Achslagers (14) in Längsrichtung (x) und q einem Dämpfungsfaktor entspricht.

6. Betriebsverfahren nach einem der Ansprüche 1 bis 5, **dadurch gekennzeichnet, dass** an dem Rollenprüfstand zusätzlich ein Queraktuator (24) vorgesehen ist, der in einer entlang der Radachse (11) verlaufenden Querrichtung (y) auf das erste Achslager (14) oder zweite Achslager (15) einwirkt.

7. Betriebsverfahren nach Anspruch 6, **dadurch gekennzeichnet, dass** der auf das jeweilige Achslager (14, 15) einwirkende Queraktuator (24) in Kraftregelung betrieben wird.

8. Betriebsverfahren nach Anspruch 7, **dadurch gekennzeichnet, dass** in einer Betriebsart, insbesondere zur Simulierung eines unbedämpften Sinuslaufs bei Geradeaus- oder Bogenfahrt, die Kraftregelung des Queraktuators (24) auf eine vorgegebene konstante Querkraft (Fy) erfolgt, die insbesondere gleich oder ungleich Null ist.

9. Betriebsverfahren nach Anspruch 7 oder 8, **dadurch gekennzeichnet, dass** in einer Betriebsart, insbesondere zur Simulierung eines bedämpften Sinuslaufs bei Geradeaus- oder Bogenfahrt, die Kraftregelung des Queraktuators (24) auf eine vorgegebene zeitlich veränderliche Querkraft (Fy) erfolgt, die eine Dämpfungskomponente aufweist, die abhängig von einer zeitlichen Änderung einer in Querrichtung (y) gegenüber einer durch eine Mittenposition des Radsatzes (10) erfolgenden Auslenkung (Sy) des Achslagers (14, 15), auf das der Queraktuator (24) einwirkt, ist.

10. Betriebsverfahren nach Anspruch 9, **dadurch gekennzeichnet, dass** die zeitlich veränderliche Querkraft (Fy) durch die Formel

$$Fy(t)=F0y - p\ d(Sy(t))/dt$$

gegeben ist, wobei Fy(t) der zeitlich veränderlichen Querkraft, F0y einer Konstanten, $d(Sy(t))/dt$ der zeitlichen Änderung der Auslenkung (Sy) des Achslagers (14, 15), auf das der Queraktuator (24) einwirkt, in Querrichtung (y) und p einem Dämpfungsfaktor entspricht.

**11.** Betriebsverfahren nach einem der Ansprüche 1 bis 10, **dadurch gekennzeichnet, dass** zumindest für einen der Aktuatoren (22, 23, 24) eine auf das jeweilige Achslager (14, 15) einwirkende Kraft (Fx1, Fx2, Fy) und/oder Beschleunigung überwacht wird, wobei ein Fehlersignal ausgegeben wird, wenn der Absolutwert der jeweiligen Kraft (Fx1, Fx2, Fy) und/oder Beschleunigung einen jeweiligen vorgegebenen Grenzwert überschreitet.

**12.** Betriebsverfahren nach Anspruch 11, **dadurch gekennzeichnet, dass** bei Vorliegen des Fehlersignals der Rollenprüfstand und/oder das Betriebsverfahren, zumindest teilweise, abgeschaltet wird.

**13.** Rollenprüfstand für einen Radsatz (10) für ein Schienenfahrzeug zur Simulierung eines Sinuslaufs, mit zwei parallel angeordneten Schienenrollen (2, 3) und einem ersten Längsaktuator (22) und einem zweiten Längsaktuator (23), **dadurch gekennzeichnet, dass**
der Rollenprüfstand eine Regeleinrichtung (21) aufweist, die das Verfahren gemäß einem der Ansprüche 1 bis 12 durchführt.

**Claims**

**1.** Operating method for a rolling test stand for a wheelset (10) of a rail vehicle, for simulating a sinusoidal run, wherein

- the rolling test stand comprises two rail rollers (2, 3) arranged parallel to one another,
- the wheelset (10) comprises two wheels (12, 13) connected to a wheel axle (11), the wheel axle (11) being mounted to rotate with its ends in a first axle bearing (14) and a second axle bearing (15),
- in a respective basic position of the wheel bearings (14, 15) the wheels (12, 13) are in each case in contact with the rail rollers at a specific point of the rail rollers (2, 3),
- in a longitudinal direction (x) transverse to the wheel axle (11), a first longitudinal actuator (22) and a second longitudinal actuator (23) act respectively upon the first axle bearing (14) and the second axle bearing (15), and
- the first longitudinal actuator (22) that acts upon the first axle bearing (14) is operated with force regulation,

**characterised in that**

- a deflection (Sx 1) of the first axle bearing (14) relative to its basic position in the longitudinal direction (x) is determined, and
- the second longitudinal actuator (23) that acts upon the second axle bearing (15) is operated with path regulation, in such manner that a deflection (Sx 2) of the second axle bearing (15) relative to its basic position is set, which corresponds in size to the deflection (Sx 1) of the first axle bearing (14) and is set against the deflection (Sx 1) of the first axle bearing (14) in the longitudinal direction (x).

**2.** Operating method according to Claim 1, **characterised in that** the said specific points are the upper peaks of the rail rollers (2, 3).

**3.** Operating method according to Claims 1 or 2, **characterised in that** in a mode of operation, in particular for the simulation of an un-damped sinusoidal run when driving straight ahead or round a curve, the first longitudinal actuator (22) is force-regulated to a specified constant force (Fx 1), which in particular is equal or not equal to zero.

**4.** Operating method according to any of Claims 1 to 3, **characterised in that** in a mode of operation, in particular for the simulation of a damped sinusoidal run when driving straight ahead or round a curve, the first longitudinal actuator is force-regulated to a specified, time-variable force (Fx 1), which comprises a damping component that depends on a time variation of the deflection (Sx 1) of the first axle bearing (14) in the longitudinal direction (x).

**5.** Operating method according to Claim 4, **characterised in that** the time-variable force (Fx 1) is given by the following equation

$$Fx1(t) = F0x1 - q\, d(Sx1(t))/dt$$

in which Fx1(t) is the time-variable force, F0x1 is a constant, $d(Sx1(t))dt$ is the variation with time of the deflection (Sx1) of the first axle bearing (14) in the longitudinal direction (x), and q is a damping factor.

6. Operating method according to any of Claims 1 to 5, **characterised in that** on the rolling test stand a transverse actuator (24) is also provided, which acts on the first axle bearing (14) or the second axle bearing (15) in a transverse direction (y) that extends along the wheel axle (11).

7. Operating method according to Claim 6, **characterised in that** the transverse actuator (24) that acts upon the respective axle bearings (14, 15) is operated with force regulation.

8. Operating method according to Claim 7, **characterised in that** in a mode of operation, in particular for the simulation of an un-damped sinusoidal run when driving straight ahead or round a curve, the transverse actuator (24) is force-regulated to a specified constant transverse force (Fy), which in particular is equal or unequal to zero.

9. Operating method according to Claims 7 or 8, **characterised in that** in a mode of operation, in particular for the simulation of a damped sinusoidal run when driving straight ahead or round a curve, the transverse actuator (24) is force-regulated to a specified, time-variable force (Fy), which comprises a damping component, that depends on a time variation of the deflection (Sy) that takes place in the transverse direction (y) relative to a central position of the wheelset (10), of the axle bearing (14, 15) upon which the transverse actuator (24) acts.

10. Operating method according to Claim 9, **characterised in that** the time-variable transverse force (Fy) is given by the equation

$$Fy(t) = F0y - p\, d(Sy(t))/dt$$

in which Fy(t) is the time-variable transverse force, F0y is a constant, d(Sy(t))/dt is the variation with time of the deflection (Sy) of the axle bearing (14, 15) upon which the transverse actuator (24) acts in the transverse direction (y), and p is a damping factor.

11. Operating method according to any of Claims 1 to 10, **characterised in that** at least for one of the actuators (22, 23, 24) a force (Fx1, Fx2, Fy) and/or acceleration is monitored, and an error signal is emitted if the absolute value of the force (Fx1, Fx2, Fy) and/or acceleration concerned exceeds a limit value specified in each case.

12. Operating method according to Claim 11, **characterised in that** if the error signal is received, the rolling test stand is at least partially shut down and/or the operating method is discontinued.

13. Rolling test stand for a wheelset (10) for a rail vehicle, for the simulation of a sinusoidal run, having two parallel rail rollers (2, 3) and a first longitudinal actuator (22) and a second longitudinal actuator (23),
**characterised in that**
the rolling test stand comprises a regulating device (21) which carries out the method according to any of Claims 1 to 12.

**Revendications**

1. Procédé pour faire fonctionner un banc d'essai à rouleaux d'un essieu d'un véhicule ferroviaire, afin de simuler une course sinusoïdale, dans lequel

- le banc d'essai à rouleaux a deux rouleaux (2, 3) de rail disposés parallèlement,
- l'essieu (10) a deux roues (12, 13) reliées par un axe (11) de roue, l'axe (11) de roue étant monté tournant par ses extrémités dans un premier palier (14) d'axe et dans un deuxième palier (15) d'axe,
- les roues (12, 13) sont dans une position de base respective des paliers (14, 15) d'axe, en contact, respectivement en un point donné à l'avance des rouleaux (2, 3) de rail, avec ceux-ci,
- un premier actionneur (22) longitudinal et un deuxième actionneur (23) longitudinal agissent sur le premier palier (14) d'axe et respectivement le deuxième palier (15) d'axe, respectivement dans une direction (x) longitudinale s'étendant transversalement à l'axe (11) de roue et
- on fait fonctionner, en régulation de force, le premier actionneur (22) longitudinal agissant sur le premier palier (14) d'axe,

**caractérisé en ce que**

- on détermine, dans la direction (x) longitudinale, une excursion (Sx1) du premier palier (14) d'axe par rapport à sa position de base et
- on fait fonctionner, en régulation de trajet, le deuxième actionneur (23) longitudinal agissant sur le deuxième palier (15) d'axe, de manière à régler une excursion (Sx2) du deuxième palier (15) d'axe par rapport à sa position de base, excursion qui correspond en valeur absolue à l'excursion (Sx1) du premier palier (14) d'axe et est opposée, dans la direction (x) longitudinale, à l'excursion (Sx1) du premier palier (14) d'axe.

2. Procédé suivant la revendication 1, **caractérisé en ce que** les points donnés à l'avance sont les points culminents supérieurs des rouleaux (2, 3) de rail.

3. Procédé suivant la revendication 1 ou 2, **caractérisé en ce que**, dans un type de fonctionnement, notamment pour simuler une course sinusoïdale non amortie en trajet en ligne droite ou en courbe, la régulation de force du premier actionneur (22) longitudinal s'effectue à une force (Fx1) constante donnée à l'avance, qui est notamment égale à zéro ou différente de zéro.

4. Procédé suivant l'une des revendications 1 à 3, **caractérisé en ce que**, dans un type de fonctionnement, notamment pour simuler une course sinusoïdale amortie, en trajet en ligne droit ou en courbe, la régulation de force du premier actionneur (22) longitudinal s'effectue à une force (Fx1), variable dans le temps, donnée à l'avance, qui a une composante d'amortissement dépendante d'une variation dans le temps de l'excursion (Sx1) du premier palier (14) d'axe dans la direction (x) longitudinale.

5. Procédé suivant la revendication 4, **caractérisé en ce que** la force (Fx1) variable dans le temps est donnée par la formule

$$Fx1(t) = F0x1 - q \; d(Sx1(t) \; l dt.$$

dans laquelle Fx1(t) est la force variable dans le temps, F0x1 est une constante, $d$(Sx1(t)$l d$t est la variation dans le temps de l'excursion (Sx1) du premier palier (14) d'axe dans la direction (x) longitudinale et q est un facteur d'amortissement.

6. Procédé suivant l'une des revendications 1 à 5, **caractérisé en ce que**, sur le banc d'essai à rouleaux, est prévu, en outre, un actionneur (24) transversal, qui agit sur le premier palier (14) d'axe ou le deuxième palier (15) d'axe dans une direction (y) transversale s'étendant le long de l'essieu (11).

7. Procédé suivant la revendication 6, **caractérisé en ce que** l'on fait fonctionner en régulation de force l'actionneur (24) transversal agissant sur le palier (14, 15) d'axe respectif.

8. Procédé suivant la revendication 7, **caractérisé en ce que**, dans un type de fonctionnement, notamment pour simuler une course sinusoïdale non amortie, en trajet en ligne droit ou en courbe, la régulation de force de l'actionneur (24) transversal s'effectue à une force (Fy) transversale constante donnée à l'avance, qui est notamment égale à zéro ou différente de zéro.

9. Procédé suivant la revendication 7 ou 8, **caractérisé en ce que**, dans un type de fonctionnement, notamment pour simuler une course sinusoïdale amortie, en trajet en ligne droit ou en courbe, la régulation de force de l'actionneur (24) transversal s'effectue à une force (Fy) transversale, variable dans le temps, donnée à l'avance, qui a une composante d'amortissement dépendante d'une variation dans le temps d'une excursion (Sy), s'effectuant dans la direction (y) transversale par rapport à une position médiane de l'essieu (10), du palier (14, 15) d'axe, sur lequel agit l'actionneur (24) transversal.

10. Procédé suivant la revendication 9, **caractérisé en ce que** la force (Fy) transversale, variable dans temps, est donnée par la formule

$$Fy(t)=F0y - p \; d(Sy(t)/dt$$

dans laquelle Fy(t) est la force transversale variable dans le temps, F0y est une constante, d(Sy(t)/dt est la variation dans le temps de l'excursion (Sy) du palier (14, 15) d'axe sur lequel agit l'actionneur (24) transversal, dans la direction (y) transversale et p est un facteur d'amortissement.

11. Procédé suivant l'une des revendications 1 à 10, **caractérisé en ce qu'**au moins pour l'un des actionneurs (22, 23, 24), on contrôle une force (Fx1, Fx2, Fy) et/ou une accélération agissant sur le palier (14, 15) d'axe respectif, un signal d'erreur étant émis si la valeur absolue de la force (Fx1, Fx2, Fy) et/ou l'accélération respective dépasse une valeur limite respective donnée à l'avance.

12. Procédé suivant la revendication 11, **caractérisé en ce qu'**en présence du signal d'erreur, on arrête, au moins en partie, le banc d'essai à rouleaux et/ou le procédé de fonctionnement.

13. Banc d'essai à rouleaux d'un essieu (10) d'un véhicule ferroviaire pour simuler une course sinusoïdale, comprenant deux rouleaux (2, 3) de rail disposés parallèlement et un premier actionneur (22) longitudinal et un deuxième actionneur (23) longitudinal,
**caractérisé en ce que**
le banc d'essai à rouleaux a un dispositif (21) de régulation, qui effectue le procédé suivant l'une des revendications 1 à 12.

EP 3 137 872 B1

Fig. 1

12

Fig. 2

S1
Schienenräder 2, 3 in
Rotation versetzen

S2
Kraftregelung für ersten
Längsaktuator 22 und
Queraktuator 24:
z.B. Fx1=Fy=0

S3
Sx1 erfassen;
Wegregelung für den
zweiten Längsaktuator 23:
Sx2 = -Sx1.

S4
Kurzzeitig Kraftregelung für
Queraktuator 24 mit:
$Fy \neq 0$

S5
Fx1, Fy, Sx1, Sy:
Grenzwerte überschritten ?

nein

ja

S6
Notabschaltung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 122012108706 B3